# EUROPEAN PATENT APPLICATION

(11) **EP 1 313 033 A2**
(43) Date of publication of application: **21.05.2003**
(21) Application number: 02251502.7
(22) Date of filing: 07.03.2002
(51) Int. Cl.: G06F 17/30

(54) **File system, control method, and program**

(30) Priority: 16.11.2001 JP 2001350986
(71) Applicant: FUJITSU LIMITED, Kawasaki-shi, Kanagawa 211-8588 (JP)
(72) Inventor: Tamura, Masahisa, c/o Fujitsu Limited, Kawasaki-shi, Kanagawa 211-8588 (JP); Take, Riichiro, c/o Fujitsu Limited, Kawasaki-shi, Kanagawa 211-8588 (JP); Noguchi, Yasuo, c/o Fujitsu Limited, Kawasaki-shi, Kanagawa 211-8588 (JP); Ogihara, Kazutaka, c/o Fujitsu Limited, Kawasaki-shi, Kanagawa 211-8588 (JP)
(74) Representative: Stebbing, Timothy Charles

(57) **Abstract**

A file system (12) which operates under an operating system (10) has: an access executing unit which, when an access such as writing or reading to/from a file (14) occurs, processes the file in accordance with the access; a user defined process holding unit (15) which holds a user defined process (16-1, 16-2) which has previously been defined by the user; and a defined process executing unit which executes the user defined process by using the access to the file (14) as a trigger.

## Description

The invention relates to a file system which operates on (or under) an operating system, a control method for such a file system, and a program for such a control method. More particularly, the invention relates to a file system, a control method, and a program in which a process defined by the user can be executed by using an access to a file as a trigger.

In a conventional file system, a designer of the file system defines its operation or meta data and the file system only executes operations defined by the designer. A file within the file system has meta data (i.e., data about files) in a format determined by the file system and executes a process determined by the file system. If it is intended to execute a process defined by the user in such a conventional file system by using an access to the file as a trigger, it is necessary to arrange this via a specific application such that the process defined by the user can be executed by using some event as a trigger in the specific application. If it is intended to allow the user defined meta data to be held into (associated with) the file, it is necessary that the application prepares another file for the specific file and such another file is used as a meta data file for storing in a meta data area or meta data block the meta data defined by the file user on the basis of the original file.

However, according to such a conventional method, consistency is not guaranteed across accesses from different applications, and flexibility is insufficient. Moreover, since it is necessary that data is transmitted and received between the file system and the application, data processing performance suffers.

Embodiments of the invention can provide a file system, a control method, and a program in which by enabling a user defined process to be executed by using an access to a file as a trigger without depending on an application, a more flexible data control is enabled and performance can be improved.

According to the invention, a file system which operates on an operating system comprises: an access executing unit which, when an access such as writing or reading to/from a file occurs, processes the file in accordance with the access; a user defined process holding unit which holds a user defined process which has previously been defined by the user; and a defined process executing unit which executes the user defined process by using the access to the file as a trigger. As mentioned above, according to the invention, since the file system directly executes the user defined process by using the access to the file as a trigger, holding of meta data defined by the user and the user defined process can be executed in accordance with file contents or the access.

Preferably, the file system has a file managing unit which partitions each file into two areas, namely a data area and a meta data area. Further, an extended meta data area is provided for (associated with) the meta data area.

In addition, preferably, the file managing unit enables the user to designate a format of the extended meta data area. The file managing unit designates the format of the extended meta data area in accordance with the content of the data area.

More particularly, the file managing unit sets the meta data, namely, a file type as a format of the extended meta data area and determines the format of the extended meta data area in accordance with the file type. When the file is created, the file managing unit determines the file type, sets (allocates) the extended meta data area according to the file type, and thereafter, enables the user to change the file type and change the extended meta data area.

Further, preferably, the file managing unit automatically determines the file type from the content of the data area and also automatically determines the extended meta data area.

The file managing unit may have a tree structure using a directory for managing a plurality of files. The file type which is set upon creation of the file succeeds a file type of a parent directory.

The file managing unit preferably holds information extracted from the data area into the extended meta data area as extended meta data. The extended meta data extracted from the data area is duplicated and stored in (held into) the data area and the extended meta data area.

With respect to the extended meta data extracted from the data area, it is possible to have the substance (actual file data) in the data area and store a pointer to the substance in the extended meta data area.

Upon writing into the data area of the file, the defined process executing unit may change the extended meta data in the extended meta data area on the basis of the user defined process.

Alternatively, the defined process executing unit sends a message to a user program which has additionally been provided and allows the extended meta data in the extended meta data area to be changed.

Or, upon writing into the data area of the file, the defined process executing unit sets a data area change flag to the high level and allows the extended meta data in the extended meta data area to be changed by using the fact, as a trigger, that the flag has been set to the high level by a user program which has additionally been provided. The defined process executing unit preferably executes the user defined process in accordance with the file type.

The file system may have an API for allowing the user to define the process.

The API desirably has a double layer structure comprising an API which is executed in a kernel area and an API which is executed in a user area.

The size of the extended meta data area is preferably variable in accordance with the file contents.

The invention provides a control method for a file system which operates on an operating system. The control method comprises:
a user defined process holding step wherein a user defined process which has previously been defined by the user is held (stored) ;
an access executing step wherein, when an access to a file occurs, the file is processed in accordance with the access; and
a defined process executing step wherein the user defined process is executed by using the access to the file as a trigger.

The invention provides a program for realizing a file system which operates on an operating system. The program allows a computer to execute:
a user defined process holding step wherein a user defined process which has previously been defined by the user is held (stored);
an access executing step wherein, when an access to a file occurs, the file is processed in accordance with the access; and
a defined process executing step wherein the user defined process is executed by using the access to the file as a trigger.

Details of the control method of the file system and the program are similar to those in the case of the file system.

The above and other features, and advantages of the present invention will become more apparent from the following detailed description with reference to the drawings, in which:
Fig. 1 is a block diagram of a functional construction of a file system according to the invention;
Fig. 2 is an explanatory diagram of a relation between the file system of the invention and hardware;
Fig. 3 is an explanatory diagram of the processing operation of the invention for a file access;
Figs. 4A and 4B are explanatory diagrams in the case where a user defined process according to the invention is compared with a conventional example using an application;
Fig. 5 is a flowchart for a processing procedure of the file system according to the invention;
Fig. 6 is an explanatory diagram of an embodiment of the invention in case of changing a format of an extended meta data area by a definition of the user;
Fig. 7 is an explanatory diagram of an embodiment in case of changing a file type of the extended meta data area by a definition of the user;
Fig. 8 is an explanatory diagram of a file type structure which is used in file management in Fig. 7;
Figs. 9A to 9D are explanatory diagrams of a list process by addition and deletion according to the file type structure in Fig. 8;
Fig. 10 is an explanatory diagram of an embodiment in case of duplicating and holding extended meta data;
Fig. 11 is an explanatory diagram of an embodiment in case of holding the extended meta data by a pointer;
Fig. 12 is an explanatory diagram of an embodiment in case of directly processing the extended meta data by executing the user defined process;
Fig. 13 is an explanatory diagram of an embodiment in the case where a message is transferred from the user defined process to an external program and the extended meta data is processed;
Fig. 14 is an explanatory diagram of an embodiment in the case where a flag is set to the high level by the user defined process and the extended meta data is processed by an external program;
Fig. 15 is an explanatory diagram of an embodiment of the invention;
Fig. 16 is an explanatory diagram of an API having a double layer structure which is used for setting of the user defined process of the invention; and
Figs. 17A and 17B are explanatory diagrams in case of enlarging the extended meta data area of the invention.

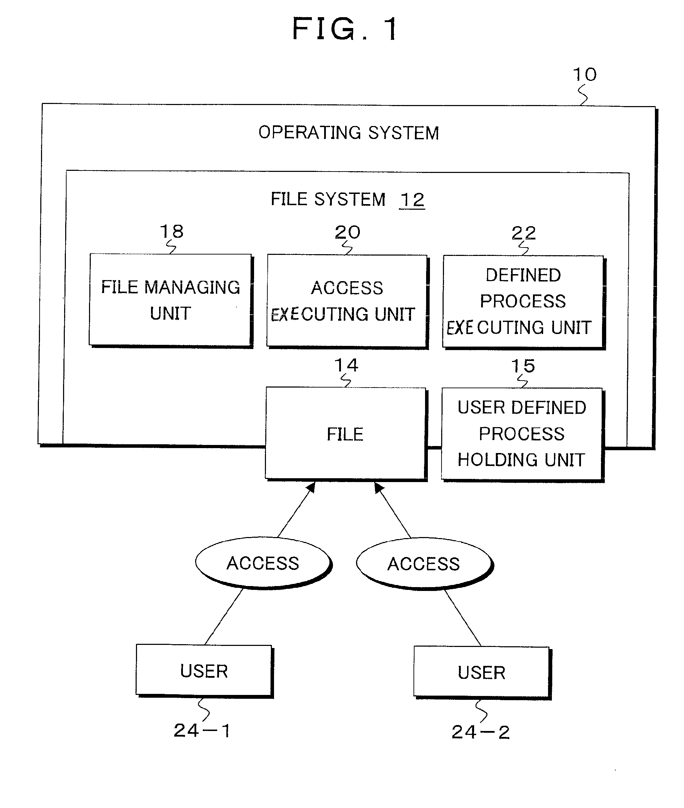

Fig. 1 is a block diagram of a functional construction of a file system according to the invention. An operating system 10 of a computer needs to provide a method of permanently using a storage medium and managing data. For this purpose, in operating systems such as UNIX(R), Windows (R), or the like, data is abstracted on a file unit basis, data management is performed, and the user accesses the data by using a file system 12 operated by the operating system 10. In order to process a file 14 created by the user, the file system 12 of the invention has a file managing unit 18, an access executing unit 20, and a defined process executing unit 22. In the file system 12 of the invention as mentioned above, a user defined process which has previously been defined by the user can be executed for the file 14 by using accesses to the file 14 from the side of users 24-1 and 24-2 as triggers. The user defined process which is executed by using the access from the user as a trigger has been held in a user defined process holding unit 15 in association with the file 14. When the accesses to the file 14 by the users 24-1 and 24-2, specifically speaking, the writing or reading operation occurs, the access executing unit 20 executes the processes for writing or reading data into/from the file 14 in response to the accesses. The defined process executing unit 22 allows the corresponding user defined process held in the user defined process holding unit 15 associated with the file 14 to be executed by using the same access which caused the process of the access executing unit 20 as a trigger.

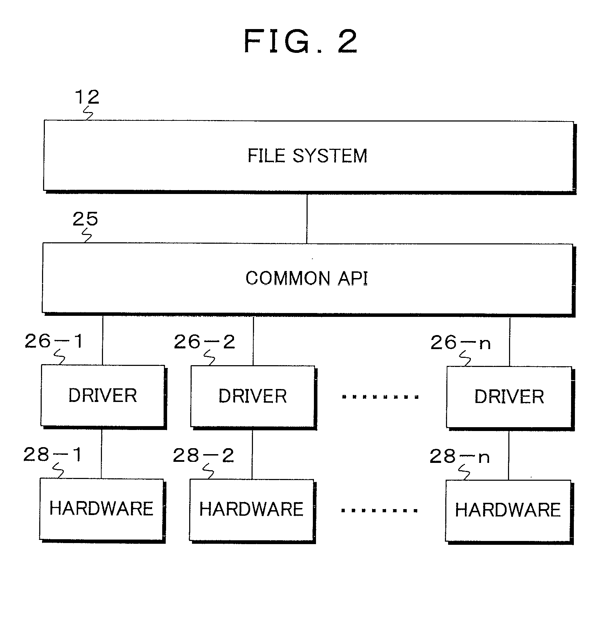

Fig. 2 is a diagram showing a relation between the file system in Fig. 1 and hardware. As storage devices in the computer, various hardware 28-1 to 28-n such as memory, hard disk drive, and the like are used. The file system 12 is connected via a common API 25 to drivers 26-1 to 26-n as software prepared for the hardware 28-1 to 28-n and accesses the corresponding hardware 28-1 to 28-n by using the drivers 26-1 to 26-n, respectively. Thus, the file system 12 can utilize the hardware components 28-1 to 28-n without being conscious of them.

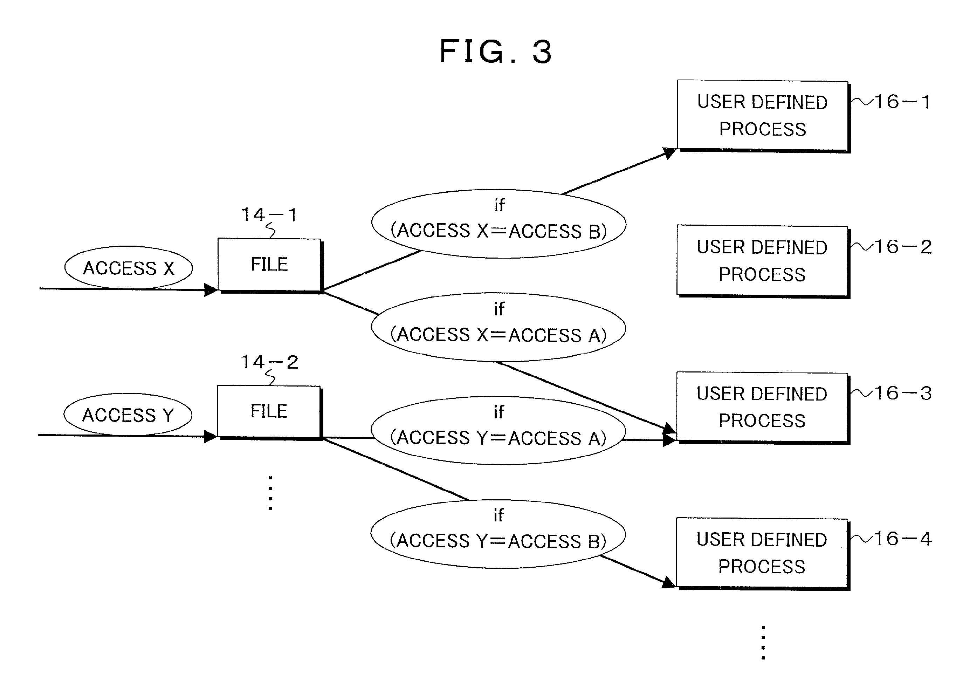

Fig. 3 shows fundamental processes responsive to the accesses from the users in the file system 12 of the invention. In the file system of the invention, files 14-1 and 14-2 are associated with a plurality of user defined processes 16-1 to 16-4 defined by the user in accordance with the accesses. In this case, when the file 14-1 receives an access X, whether a type of access X is "A" or "B" is discriminated. If the access X = access A, the file 14-1 is associated with the user defined process 16-3. If the access X = access B, the file 14-1 is associated with the user defined process 16-1. Also with respect to the file 14-2, whether a type of access Y is "A" or "B" is discriminated. If the access Y = access A, the file 14-2 is associated with the user defined process 16-3. If the access Y = access B, the file 14-2 is associated with the user defined process 16-4. Therefore, if the access, namely, "access A" is issued to the file 14-1, the file system of the invention executes the process corresponding to "access A" of the file 14-1 and executes the user defined process 16-3 as a process which has previously been defined by the user for "access A".

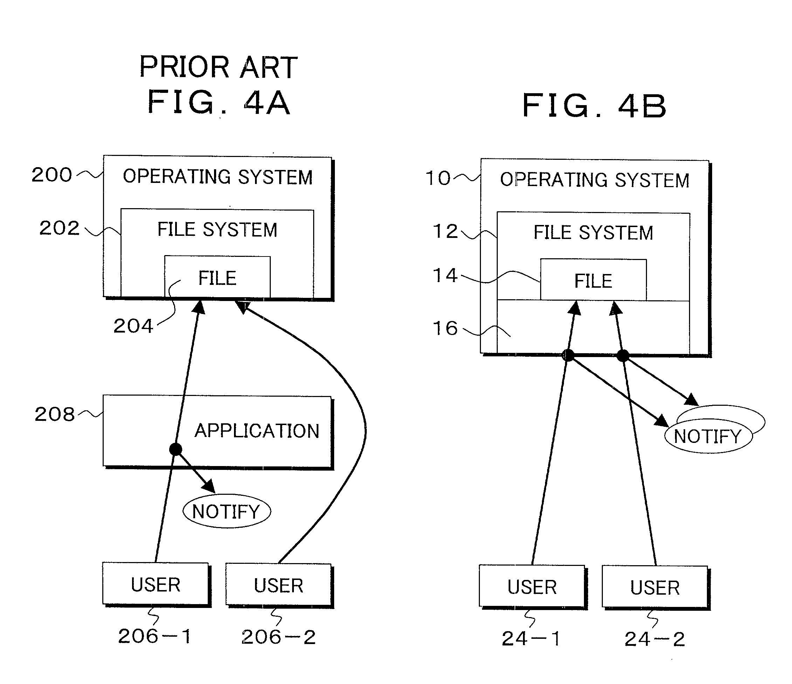

Fig. 4A is a diagram showing a conventional case where an application is used. Fig. 4B is a diagram showing a case where the user defined process is executed by the file system of the invention. According to the conventional system of Fig. 4A, an application 208 is arranged between a user 206-1 and a file 204 of a file system 202 which operates under an operating system 200, and the application 208 monitors an access to the file 204, thereby providing a function for executing a process defined by the user, for example, a process for making a notification to the outside. However, although the desired user defined process can be executed for the user 206-1 who accesses via the application 208, the user defined process cannot be executed for a user 206-2 who accesses without intervention of the application 208. There is also a problem that an overhead occurs because the application 208 intervenes in the access. To prevent such a problem, according to the invention (Fig. 4B), by implementing a user defined process 16 in the file system 12 side, it is possible to make a notification to the outside which has been preset as a process by the user by the execution of the user defined process 16, without depending on a specific application in response to the accesses by the users 24-1 and 24-2. The processing overhead caused by the intervention of the application can be avoided.

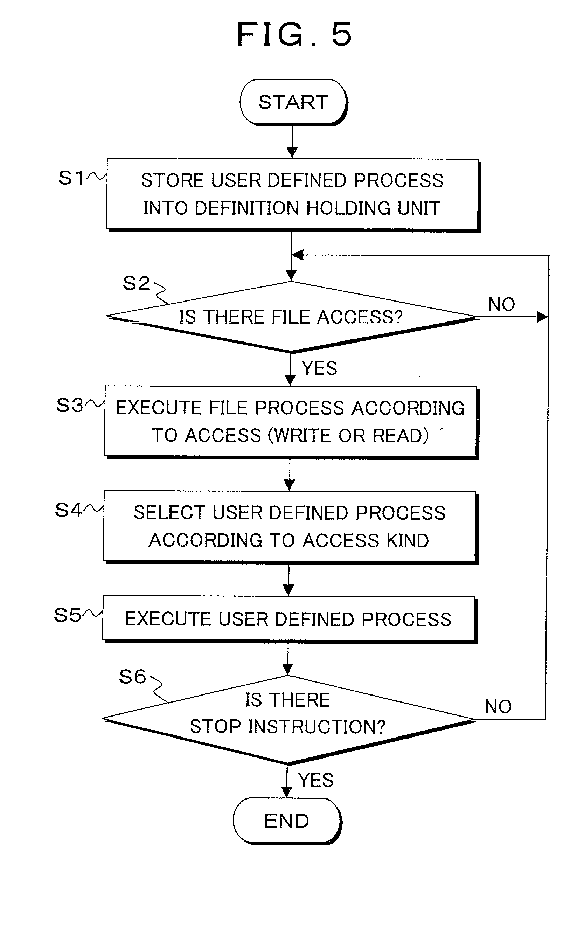

Fig. 5 is a flowchart for a processing procedure, that is, a program in the file system of the invention. First, in step S1, the user defined process is held in the user defined process holding unit 15. Subsequently, in step S2, whether the file has been accessed or not is discriminated. If the file has been accessed, a file process according to the access, that is, the writing or reading operation is executed in step S3. In step S4, the associated user defined process is selected in accordance with the type of access. The selected user defined process is executed in step S5. The processes in steps S2 to S5 as mentioned above are repeated until a stop instruction of the system is issued in step S6.

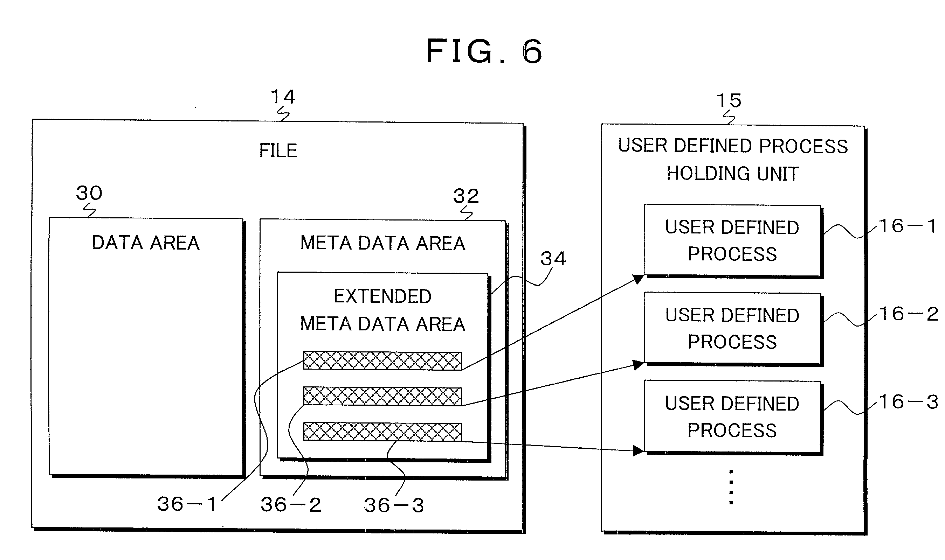

Fig. 6 shows a specific embodiment of a file system of the invention. In the embodiment, a file system having extended meta data will be explained as an example. The file 14 is divided into (managed by) two areas: a data area 30 and a meta data area 32. The substance of the data in the file 14 is stored in the data area 30. Management information of the file 14, for example, an updating time, a file size, and the like are stored in the meta data area 32. In the invention, an extended meta data area 34 which can be defined by the user is newly provided for the meta data area 32. Hitherto, a format of the meta data area 32 has been determined for every file system and fixed by the designer of the file system. However, the user can define the extended meta data area 34 which is newly provided in the invention, and extended meta data in a different format can be held in accordance with the content of the file 14. For example, extended meta data 36-1 to 36-3 has been preset in the extended meta data area 34. The user defined processes 16-1 to 16-3 as processes which have previously been defined by the user are stored in the user defined process holding unit 15 in association with the extended meta data 36-1 to 36-3, respectively.

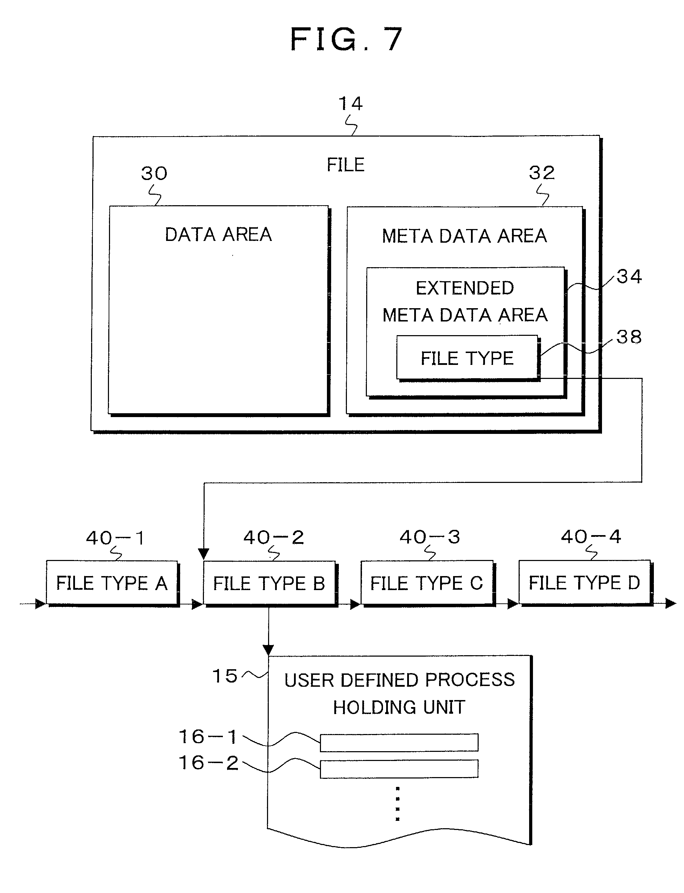

Fig. 7 shows an embodiment in the case where a file type has been implemented as an example of an implementing method for changing the format of the extended meta data area in accordance with the file contents. The file 14 holds meta data, namely, a file type 38 at a designated position in the extended meta data area 34 provided in the meta data area 32. The user defines extended meta data in a different format in accordance with the file type 38 in the extended meta data area 34. The extended meta data in the user defined format is held in the extended meta data area 34. Further, the user associates the user defined processes in accordance with the file type 38. For instance, it is now assumed that a file type B has been set into the file 14. The extended meta data defined as a file type B is held and the user defined processes 16-1, 16-2, ... in the user defined process holding unit 15 are associated. The user can define the file type 38 in the extended meta data area 34 and can dynamically add a file type. As one of the implementing methods of dynamically adding the file type, kinds of file types are managed by a list structure and dynamic addition and deletion are enabled.

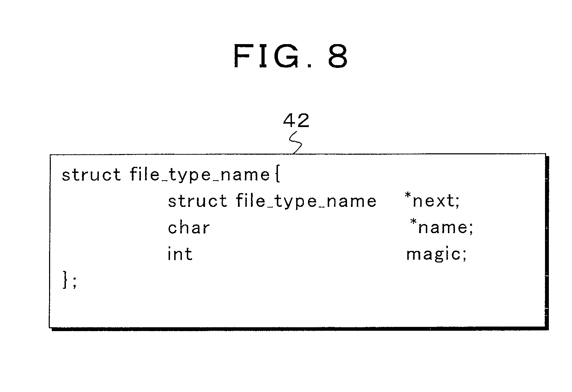

Fig. 8 shows an example of a file type structure 42 which is managed by the list structure. The file type structure 42 is constructed by: a pointer "next" for the list structure; a name "name" of the file type; and a number "magic" which is unconditionally determined for all file types. The file type structure 42 is managed by the list structure.

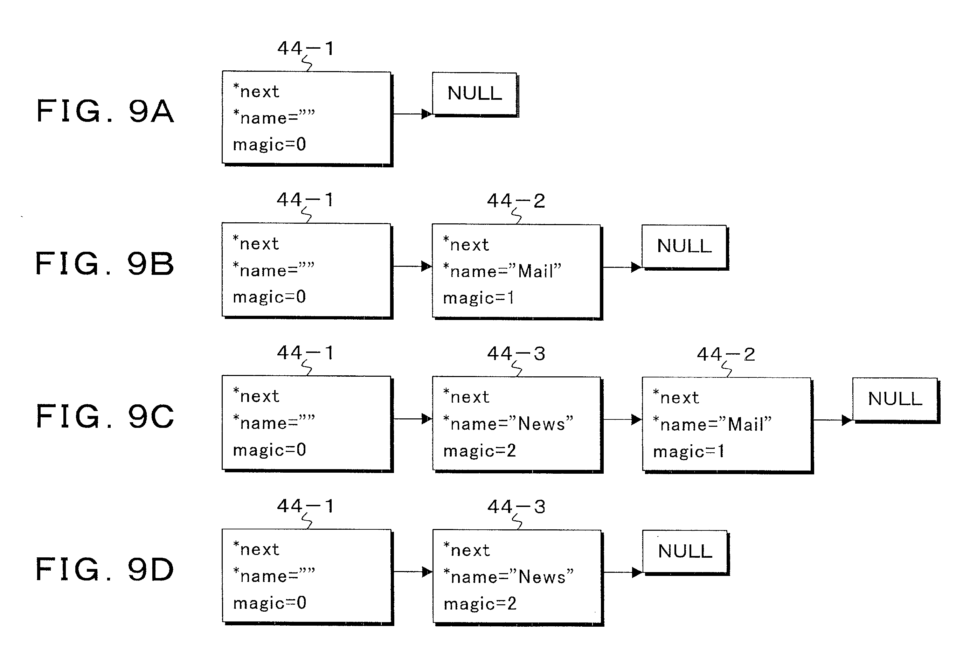

Figs. 9A to 9D are diagrams showing a flow of processes of a file type list for managing the file type structure 42 in Fig. 8 by the list structure. Fig. 9A shows the flow at the time of the first file creation and a file type structure 44-1 is created. Fig. 9B shows a case where a file type "Mail" has been registered, and a file type structure 44-2 of the file type "Mail" is linked by the list structure. Fig. 9C shows a case where a file type "News" has been further registered, and a corresponding file type structure 44-3 is linked. Moreover, Fig. 9D shows a case where the file "Mail" has been deleted. Functions for registering and deleting the file type are prepared for the processes shown in Figs. 9A to 9D, so that items can be dynamically added to and deleted from the list.

According to the file type of the files which are managed by the file system of the invention, it is possible to take a procedure such that a default file type is preset upon file creation and, thereafter, it is changed as necessary. In this case, it is also possible to prepare a general file type and set the general file type as a default file type upon file creation. Upon management of the files, it is also possible to use a method whereby, as a default file type, a file type of a parent directory of such a file is succeeded (adopted) by using a tree structure using the directory. Further, it is also possible to read the contents in the file and automatically set an optimum file type.

That is, the procedure for creating the file is processed by the following two steps:
(1) upon file creation, the default file type is set and, at the same time, the extended meta data is also set, and
(2) the file type is set as necessary.
Therefore, upon file creation, the file type is set without needing the user to be aware of it.

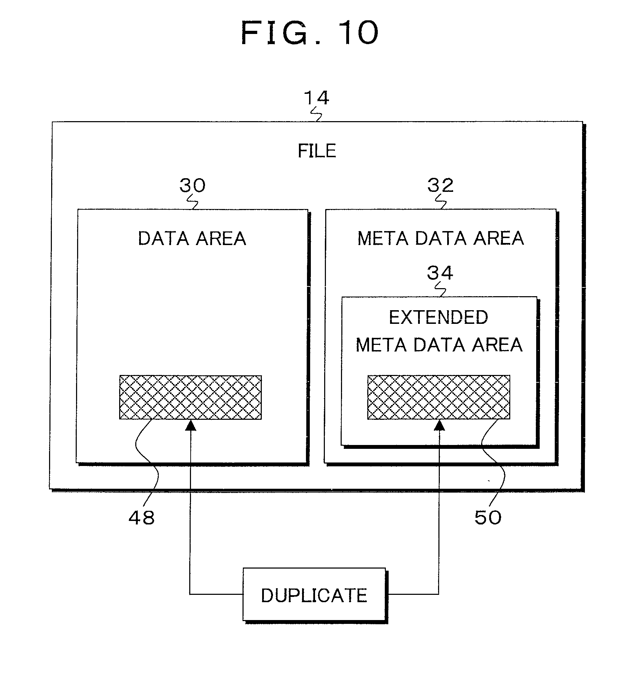

Information obtained by extracting the content of the data area of the file (i.e. actual file data) can be also held in the extended meta data in the extended meta data area 34. As a method of holding the extended meta data in this case, as shown in Fig. 10, extracted information 48 serving as content in the data area 30 is copied as extended meta data 50 into the extended meta data area 34, and the data is duplicated and held. In the case where the data has been duplicated and held, if the data area 30 is changed, the copy of the extracted information 48 obtained after the change and stored in the extended meta data area 34 is necessary.

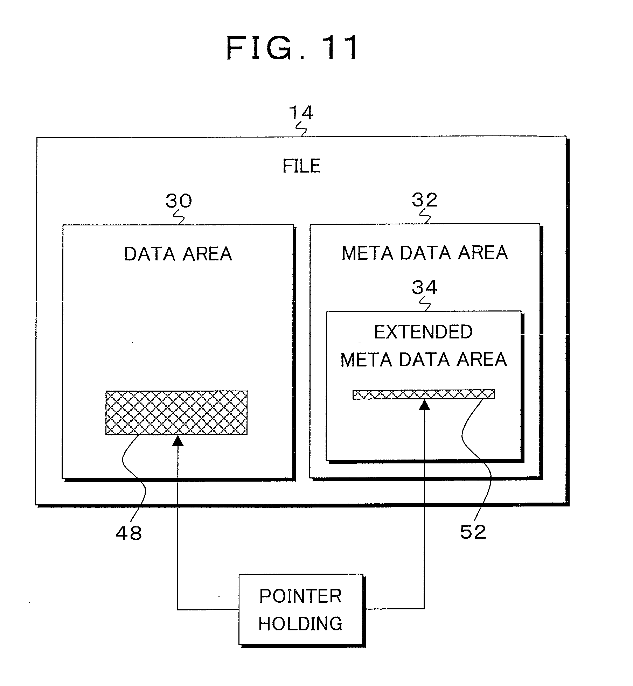

Fig. 11 shows another embodiment in the case where information obtained by extracting the content of the data area of the file is held in the extended meta data. In the embodiment, the extracted information 48 as an embodiment of the data area 30 is not stored in the extended meta data area 34 but a pointer 52 to the extracted information 48 is held as extended meta data. In this case, when the data area 30 is changed, it is necessary to update the pointer 52 in the extended meta data area 34 and its size information. As a specific example in which the contents in the data areas of the files in Figs. 10 and 11 are held as extended meta data as mentioned above, for example, when considering the format "Mail" as a file type, there is a method whereby an area of, for example, "To" in a mail header portion in the data area is held in the extended meta data area 34. A name and a mail address designated as a destination by a sender upon transmission of mail have been stored in the "To" area in the mail header portion. In the case where the contents in the data area 30 have been reflected to (duplicated in) the extended meta data area 34 on the basis of the embodiment of Fig. 10 or 11, it is necessary to change the extended meta data area 34 in accordance with the change of the data area 30. At this time, a problem of synchronization occurs.

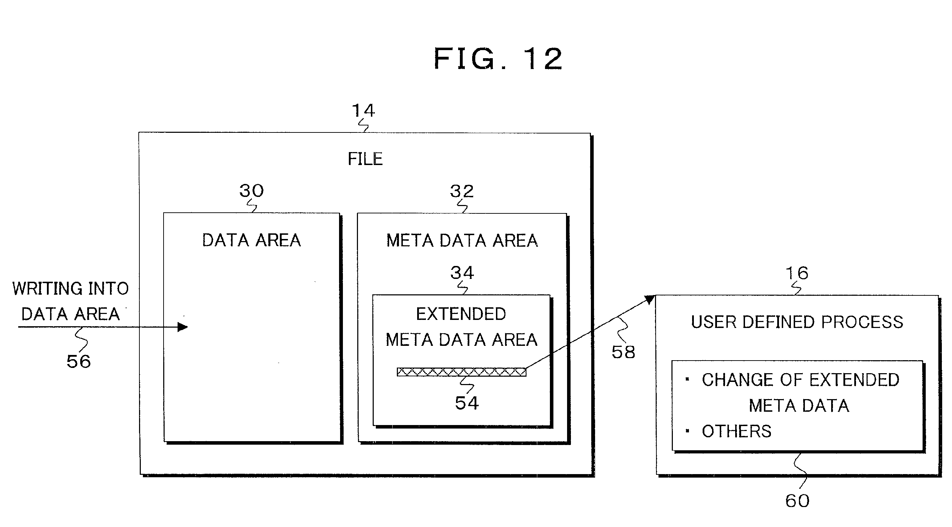

Fig. 12 shows an embodiment of processes in case of changing the extended meta data area in accordance with the change of the data area. The embodiment of Fig. 12 is characterized in that when the data is written (56) into the data area 30 of the file 14, extended meta data 54 is changed on the basis of the user defined process 16. That is, when writing (56) into the data area 30 of the file 14 occurs, the access executing unit 20 in the file system 12 of the invention shown in Fig. 1 executes the writing process to the data area 30 and the defined process executing unit 22 executes the user defined process 16 which has been associated (58) with the extended meta data 54. As definition contents 60, "change of extended meta data" has been defined in the user defined process 16. Therefore, as for the extended meta data 54 in the extended meta data area 34, for example, in case of Fig. 10, the extracted information 48 obtained after the change is copied in response to the change of the data area 30. In case of Fig. 11, the pointer 52 of the extracted information 48 obtained after the change, and its size, are changed. The writing into the data area 30 in association with the writing (56) into the data area and the execution of the user defined process 16 are continuously executed. Since the extended meta data is automatically changed during such a series of processes, the application does not need to be aware of the synchronization of the extended meta data. Other processes for the file 14 are blocked during the continuous processes in association with the series of writing operations.

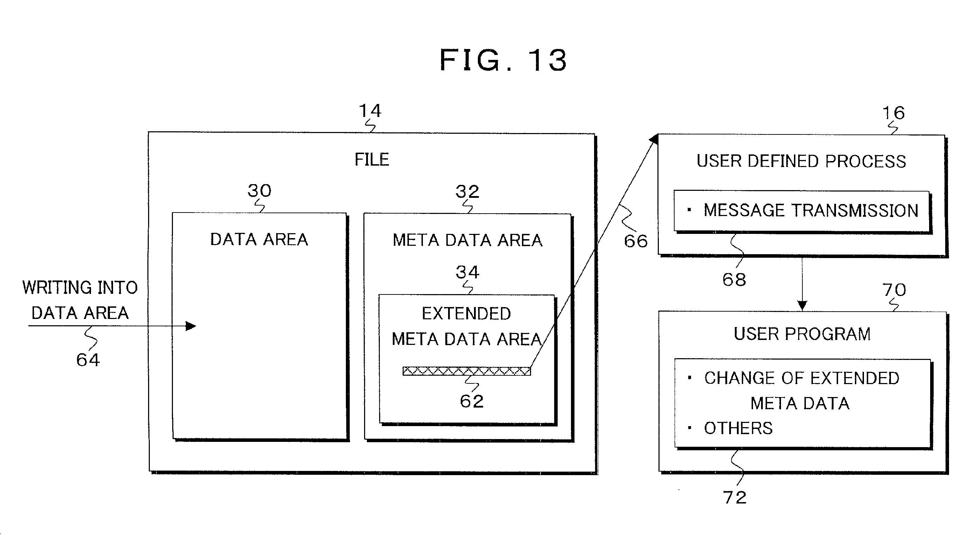

Fig. 13 shows an embodiment in the case where upon writing into the data area, the file system executes the user defined process and sends a message to a user program which has additionally been provided and the extended meta data is changed by the user program which received the message. When the data is written (64) into the data area 30 of the file 14, the access executing unit 20 in the file system 12 in Fig. 1 executes the writing process to the data area 30. Subsequently, the defined process executing unit 22 in Fig. 1 executes the user defined process 16 associated with the write access. Since "message transmission" has been defined in definition contents 68 of the user defined process 16, the message is sent to an external user program 70. In the user program 70 which received the message, since "change of extended meta data" has been described in program contents 72, extended meta data 62 in the extended meta data area 34 in the file 14 is changed to the changed contents in the data area 30. As for the process for changing the extended meta data by the external user program in association with the change of the data area as mentioned above, since the process can be performed at an application level, a more flexible process can be executed. However, it is necessary that the consistency of synchronization is managed on the application side.

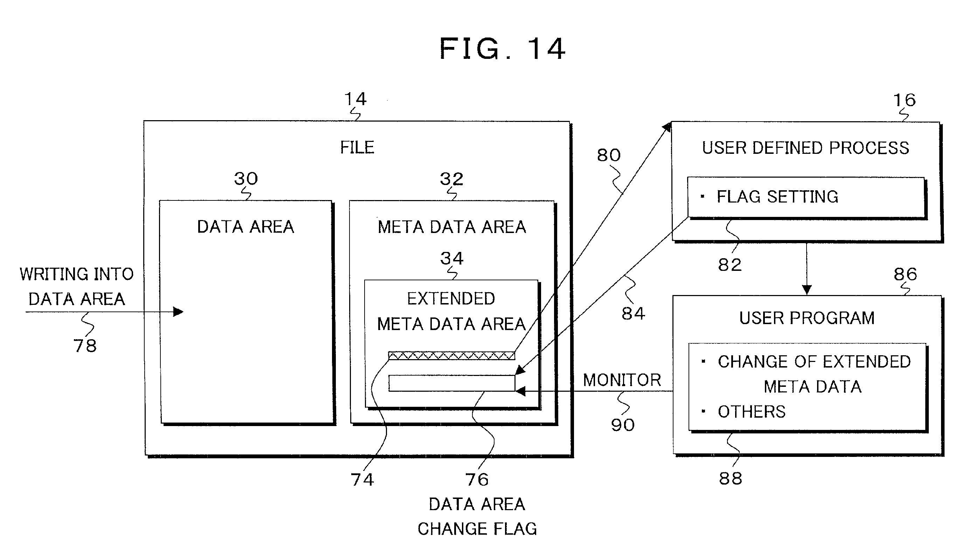

Fig. 14 shows an embodiment in case of executing processes such that a data area change flag is set to the high level upon writing into the data area, a user program which has additionally been provided monitors this flag, and the user program executes the process for changing the extended meta data by using the fact that the flag has been set to the high level as a trigger. Upon writing into the data area 30 of the file 14, the access executing unit 20 in the file system 12 in Fig. 1 executes the writing process of the data into the data area 30. Subsequently, the defined process executing unit 22 in Fig. 1 executes the user defined process 16 associated (80) with the access of the writing (78). Since "flag setting" has been defined in definition contents 82 of the user defined process 16, a data area change flag 76 provided in the extended meta data area 34 is set to the high level by the execution of the user defined process 16. A user program 86 monitors (90) the data area change flag 76 in the extended meta data area 34. At a point when the high level of the flag is recognized, the process for "change of extended meta data" described as program contents 88 is executed. The data contents in the data area 30 obtained after the writing are copied into extended meta data 74 or the pointer is updated. As mentioned above, the flag which is controlled by the user defined process is monitored by the user program and the process for changing the extended meta data in association with the data writing is executed, so that the processes which are continuously executed from the writing operation that is executed on the file system side can be minimized. Although the changing process of the extended meta data area 34 can be exclusively performed by the data area change flag 76, since the flag has to be always monitored by the user program 86, an overhead corresponding to such a monitoring operation occurs.

As for the process for the change of the data area by the file system of the invention, a similar method can be also used in case of executing a specific process by using the access as a trigger besides the updating of the extended meta data area. For example, it is possible to realize a process of transferring the file to a predetermined specific user by using the writing into the data area as a trigger. A similar method can be also applied to not only the write access but also another access such as reading or the like. For example, it is also possible to execute processes such that a counter for recording the number of reading times is provided in the extended meta data area, and when the count reaches a predetermined value, a predetermined specific user is notified of such a fact.

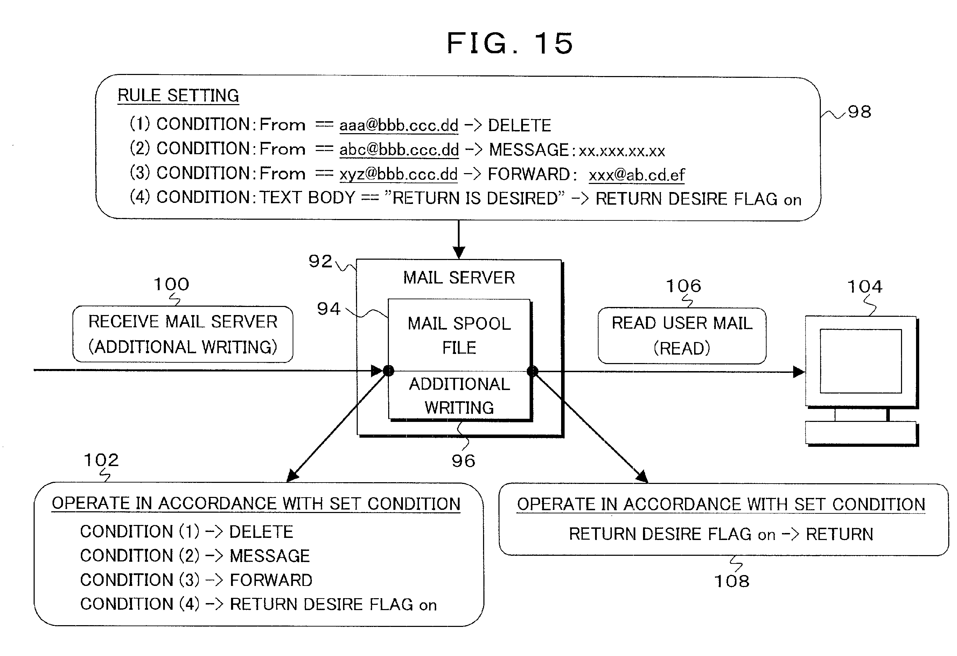

Fig. 15 shows a specific applying example of a file system of the invention. As a use example of a mail spool file, Fig. 15 shows an embodiment of a system in which information is extracted from mail that is additionally written into a mail spool file received by a mail server and notified to a partner destination set by the user. First, rule setting (98) is preliminarily performed to a mail server 92. According to the rule setting (98), the following rules are preset.
(1) Mail sent from "aaa@bbb. ccc. dd" is deleted.
(2) In case of mail sent from "abc@bbb. ccc.dd", a message is sent to an IP address "xx. xxx. xx. xx".
(3) In case of mail sent from "xyz@bbb. ccc. dd", the mail is transferred to "xxx@ab. cd. ef".
(4) If mail in which "return is desired" is written in a text body has been sent when the user reads it, confirmation mail is automatically sent to a sender.

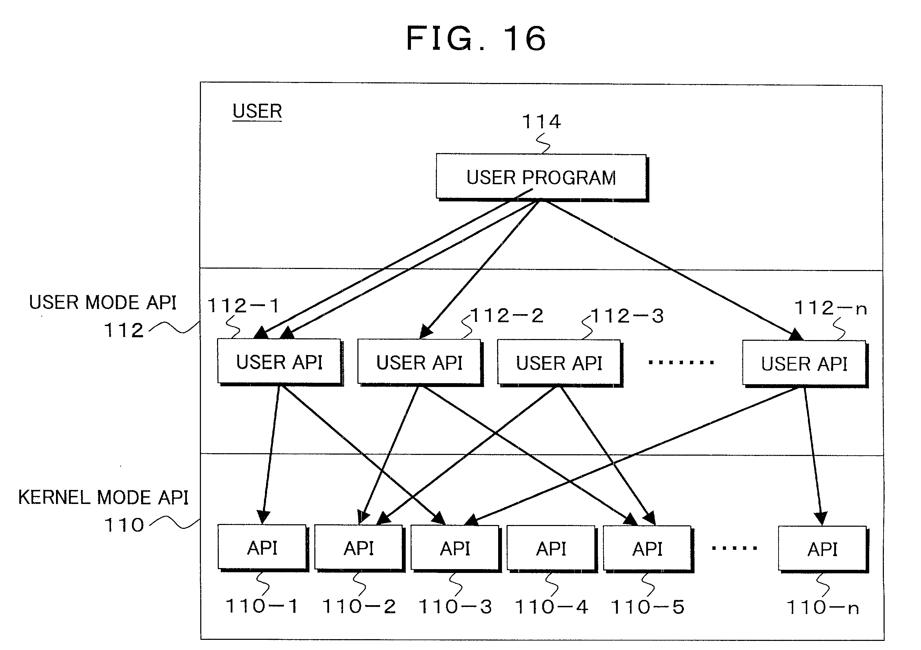

When a mail server reception (100) for newly receiving mail occurs, the mail server 92 additionally writes (96) the received mail into a mail spool file 94. With respect to the mail which was additionally written (96), whether it is matched with the conditions set by the rule setting (98) or not is discriminated. In this case, for example, if the mail has been sent from "aaa@bbb. ccc. dd", it is deleted. If the mail has been sent from "abc@bbb. ccc. dd", it is notified to "xx. xxx. xx. xx". If mail has been sent from "xyz@bbb. ccc. dd", it is transferred to "xxx@ab. cd. ef". Further, if a string "return is desired" exists in the text body, a return desire flag is set to the high level. The above series of operations is an operation 102 according to the set conditions. Subsequently, assuming that the user performed user mail reading (106) by a client 104, if the return desire flag is ON in the mail, an operation 108 according to the set conditions for transmitting reception confirmation mail to the sender is executed. Further, in order to effectively use the meta data information based on the file type set by the file system of the invention, the file system needs to have an API serving as an entrance for the user. The user sets the user defined process and the extended meta data by using the API which the file system has. It is desirable that the API for this purpose has a double layer structure comprising a kernel mode API 110 having APIs 110-1 to 110-n of a kernel mode and a user mode API 112 having user APIs 112-1 to 112-m for a user program 114 as shown in Fig. 16. The following functions are implemented in this API: an adding/deleting function of the file type; a setting/changing function of the file type; a setting/changing function of the extended meta data format; a setting/changing function of the user defined process; a writing/reading function of the extended meta data area; a synchronizing function for synchronizing the data area and the extended meta data area; and the like.

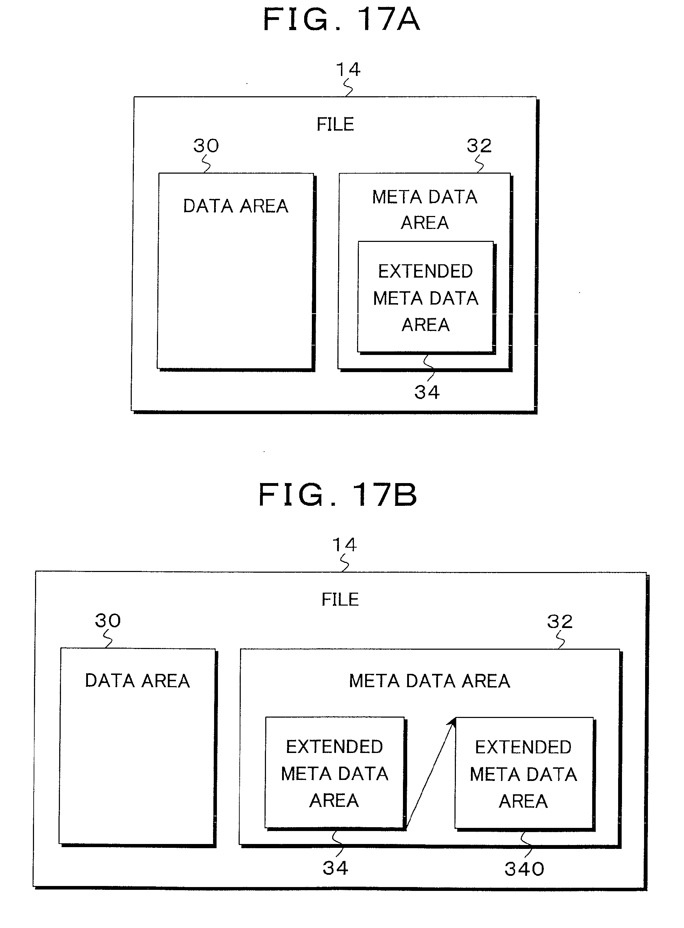

Further, in the file system of the invention, the size of the extended meta data area which can be defined by the user depends on the definition by the user. It may occur that the extended meta data increases in accordance with the data area of the file and the area provided for it becomes insufficient. Therefore, as shown in Fig. 17A, if the extended meta data area 34 set with respect to the initial file 14 becomes insufficient because of an increase in extended meta data and the data cannot be fully stored therein, an extended meta data area 340 is newly assured (i.e. another block is allocated) and the areas 34 and 340 are linked as shown in Fig. 17B, thereby realizing extension of the extended meta data area 34.

As described above, according to the invention, the file system directly executes the user defined process by using the access to the file as a trigger. The user defined process can be executed by using the access to the file as a trigger without depending on the application. A more flexible data control can be made and the performance of the file system can be improved.

The invention is not limited to the foregoing embodiments but incorporates many proper variations and modifications without losing the advantages of the invention. Further, the invention is not limited by the numerical values shown in the foregoing embodiments.

## Claims

1. A file system which operates on an operating system, comprising:
an access executing unit which, when an access to a file occurs, processes said file in accordance with said access;
a user defined process holding unit which holds a user defined process which has previously been defined by the user; and
a defined process executing unit which executes said user defined process by using the access to said file as a trigger.

2. A system according to claim 1, further comprising a file managing unit which manages said file by two areas of a data area and a meta data area,
and wherein an extended meta data area is provided for said meta data area and said file managing unit enables the user to designate a format of said extended meta data area.

3. A system according to claim 2, wherein said file managing unit designates the format of said extended meta data area in accordance with contents in said data area.

4. A system according to claim 3, wherein said file managing unit sets meta data, namely, a file type as a format of said extended meta data area and determines the format of said extended meta data area in accordance with said file type.

5. A system according to claim 4, wherein said file managing unit determines the file type upon creation of the file, sets the extended meta data area in accordance with said file type, and thereafter, enables the user to change said file type and change said extended meta data area.

6. A system according to claim 5, wherein said file managing unit automatically determines the file type from the contents in the data area of said file and also automatically determines said extended meta data area.

7. A system according to claim 5, wherein said file managing unit has a tree structure using a directory for managing a plurality of files, and the file type which is set upon creation of the file succeeds a file type of a parent directory.

8. A system according to any of claims 2-7, wherein said file managing unit holds information extracted from said data area as extended meta data into said extended meta data area.

9. A system according to claim 8, wherein said extended meta data extracted from said data area is duplicated and held in said data area and said extended meta data area.

10. A system according to claim 8, wherein in said extended meta data extracted from said data area, a substance is held in said data area and a pointer to the substance in said data area is held in said extended meta data area.

11. A system according to any of claims 2 to 10, wherein upon writing into the data area of said file, said defined process executing unit changes extended meta data in said meta data area on the basis of said user defined process.

12. A system according to any of claims 2 to 10, wherein upon writing into the data area of said file, said defined process executing unit sends a message to a user program which is additionally provided and changes extended meta data in said extended meta data area.

13. A system according to any of claims 2 to 10, wherein upon writing into the data area of said file, said defined process executing unit sets a data area change flag to a high level and changes extended meta data extended in said extended meta data area by using the fact, as a trigger, that said flag has been set to the high level by a user program which is additionally provided.

14. A system according to any of claims 4 to 7, wherein said defined process executing unit executes the user defined process in accordance with said file type.

15. A system according to any preceding claim, further having an API for allowing the user to define a process.

16. A system according to claim 15, wherein said API has a double layer structure comprising an API which is executed in a kernel area and an API which is executed in a user area.

17. A system according to any of claims 2 to 16, wherein a size of said extended meta data area is variable in accordance with the file contents.

18. A control method for a file system which operates on an operating system, comprising:
a user defined process holding step wherein a user defined process which has previously been defined by the user is held;
an access executing step wherein, when an access to a file occurs, said file is processed in accordance with said access; and
a defined process executing step wherein said user defined process is executed by using the access to said file as a trigger.

19. A method according to claim 18, further comprising a file managing step wherein said file is managed by two areas of a data area and a meta data area, an extended meta data area is further provided for said meta data area, and said file managing unit enables the user to designate a format of said extended meta data area.

20. A method according to claim 19, wherein in said file managing step, the format of said extended meta data area is designated in accordance with contents in said data area.

21. A method according to claim 20, wherein in said file managing step, meta data, namely, a file type is set as a format of said extended meta data area and the format of said extended meta data area is determined in accordance with said file type.

22. A method according to claim 21, wherein in said file managing step, the file type is determined upon creation of the file, the extended meta data area according to said file type is set, and thereafter, the user is enabled to change said file type and change said extended meta data area.

23. A method according to claim 22, wherein in said file managing step, the file type is automatically determined from the contents in the data area of said file and said extended meta data area is also automatically determined,

24. A method according to claim 22, wherein in said file managing step, a tree structure using a directory for managing a plurality of files is provided, and the file type which is set upon creation of the file succeeds a file type of a parent directory.

25. A method according to any of claims 19 to 24, wherein in said file managing step, information extracted from said data area is held as extended meta data into said extended meta data area.

26. A method according to claim 25, wherein said extended meta data extracted from said data area is duplicated and held in said data area and said extended meta data area.

27. A method according to claim 25, wherein in said extended meta data extracted from said data area, a substance is held in said data area and a pointer to the substance in said data area is held in said extended meta data area.

28. A method according to any of claims 19 to 27, wherein in said defined process executing step, upon writing into the data area of said file, extended meta data in said meta data area is changed on the basis of said user defined process.

29. A method according to any of claims 19 to 27, wherein in said defined process executing step, upon writing into the data area of said file, a message is sent to a user program which is additionally provided and extended meta data in said extended meta data area is changed.

30. A method according to any of claims 19 to 27, wherein in said defined process executing step, upon writing into the data area of said file, a data area change flag is set to a high level and extended meta data in said extended meta data area is changed by using the fact, as a trigger, that said flag has been set to the high level by a user program which is additionally provided.

31. A method according to any of claims 21 to 24, wherein in said defined process executing step, the user defined process is executed in accordance with said file type.

32. A method according to any of claims 19 to 31, wherein an API for allowing the user to define a process is further provided.

33. A method according to claim 32, wherein said API has a double layer structure comprising an API which is executed in a kernel area and an API which is executed in a user area.

34. A method according to any of claims 19 to 33, wherein a size of said extended meta data area is variable in accordance with the file contents.

35. A program for realizing a file system, wherein said program allows a computer to execute:
a user defined process holding step wherein a user defined process which has previously been defined by the user is held;
an access executing step wherein, when an access to a file occurs, said file is processed in accordance with said access; and
a defined process executing step wherein said user defined process is executed by using the access to said file as a trigger.
